# EUROPEAN PATENT APPLICATION

(11) **EP 4 768 682 A1**
(43) Date of publication of application: **01.07.2026**
(21) Application number: 24223757.6
(22) Date of filing: 30.12.2024
(51) Int. Cl.: E04H 12/34, E04H 12/18, F16M 11/34

(54) **STACKABLE LIFTING DEVICE**

(71) Applicant: Strzelecki, Jan, 62-100 Wagrowiec (PL)
(72) Inventor: Strzelecki, Jan, 62-100 Wagrowiec (PL)
(74) Representative: JWP Patent & Trademark Attorneys

(57) **Abstract**

The subject of the present invention is a stackable lifting device for electronic devices, such as lighting fixtures, video surveillance devices and road signs. The stackable lifting device according to the present invention comprises a carrier frame (2), a mast (1) embedded in the carrier frame (2), and stay arms (9,11) for stabilization of the position of the carrier frame (2) and the mast (1). The stay arms (9,11) have an adjustable length and constitute at least one longitudinal stay arm (9) and at least two rotatable stay arms (11). The each longitudinal stay arm (9) is rotatably attached to a first end (3) of the carrier frame (2), and each of the rotatable stay arms (11) is rotatably attached to a rotatable support (12). The rotatable supports (12) are rotatably attached to a second end (4) of the carrier frame (2).

## Description

The subject of the present invention is a stackable lifting device for electronic devices, such as lighting fixtures, video surveillance devices and road signs. Devices of this type are often used near road, industrial and residential infrastructure construction sites; during mass events, for crowd management (light signs); with surveillance devices, to ensure safety; to light the site of searches at the times of operation of services or inspection of sites related to an investigation, etc. Use of such devices is very often made by services such as the police, customs services, fire brigade, water rescue and mountain rescue. Such devices also allow for temporary lighting of car parks. A military utilization thereof - on training areas, in temporary camps or in refugee camps - is also possible. Another option is a hobby consumer use: supplementary lighting of a plot, night fishing, night gardening or renovation works, video surveillance over a plot.

The document WO2009140415A1 discloses a portable stand comprising support legs and a mast which can be retracted into a case, forming a uniform single entity for storage and stable support of a device mounted on the mast. The legs and the mast are connected to the case by means of hinges enabling their rotation, and have an adjustable length. The case is furnished with wheels and an extendable handle facilitating transport after retraction of the legs and the mast. There may be a concealment compartment with a movable cover inside comprising controls or connections to the device.

The document US4850161A discloses an extendable mast support system utilizing a plurality of anchor points disposed radially from a base of the mast. Supportive brackets mounted on the mast enable several measurement sprockets to be mounted through which one continuous rope passes connecting the anchor points with the brackets. Devices for stress measurement control the length of the rope during extending or concealing of the mast. The use of the rope with beads, cooperating with the sprockets, prevents differences in the length of individual sections, which allows to maintain the mast in a vertical position, even with an uneven tension.

The document US9052060B1 discloses a tripod which consists of a base, a mounting seat and a mounting mechanism with an extendable tube. The mounting seat has two protrusions and two recesses with flexibly attached snap elements. The base is connected to a lower end of the extendable tube. Owing to the possibility of connecting the tripods by mounting the protrusions of one tripod into the recesses of another one, the tripods can be laid out in the form of a cuboid, which facilitates storage and saves room.

**In** many known solutions, stabilization of the position of the mast is attained owing to the filling of a medium container or by using stay lines. A more usage-convenient solution with a simplified structure is sought which provides stable support of the mast with the possibility of adapting the position of the supports to the available space.

The object of the present invention is also to solve the problem of transporting multiple units of the lifting device together with a lifted device within the area of a surface occupied by the one device through the possibility to set the devices on top of each other so as to transport the devices to the site of their work as conveniently and economically as possible. The solutions available on the market strive to limit the occupied transport space only partially, implementing it, e.g., through the possibility of laying the mast down. However, they do not take advantage of the possibility to utilize the space above the devices as well.

The stackable lifting device according to the present invention comprises a carrier frame, a mast embedded in the carrier frame, and stay arms for stabilization of the position of the carrier frame and the mast. The stay arms have an adjustable length. The stay arms constitute at least one longitudinal stay arm and at least two rotatable stay arms. The longitudinal stay arm is rotatably attached to a first end of the carrier frame. Each of the rotatable stay arms is rotatably attached to one of rotatable supports, wherein the rotatable supports are rotatably attached to a second end of the carrier frame.

Owing to such a structure, the lifting device according to the present invention provides stable support of the mast while retaining the convenience of usage. A possibility is also provided to adapt the position of the supports to the available space, allowing for stabilization of the structure also with a limited space available for the disposition of the supports. The rotatable stay arms arranged on the rotatable supports may rotate independently of the rotatable supports. This affords the possibility to support the device in an appropriate configuration if, e.g., it is to work in a narrow space or be put against the wall of a building. Moreover, the stay arms afford the possibility to be brought closer to the carrier frame in a transport position, which significantly reduces the space occupied by them. In effect, the lifting device in the transport position can achieve dimensions much smaller than a work position. After retraction of the device into the transport position, owing to the compact structure, stacking the devices by stably setting them in a one-on-top-of-another-one manner is facilitated, which allows to save room during storage or transport. The carrier frame around the mast in the transport position of the stackable lifting device acts as a crate, protecting the elements of the structure of the lifting device and possible additional equipment which may be concealed inside the carrier frame.

The rotatable attachment means the possibility of rotational movement in at least one axis of rotation. Preferably, the rotatable stay arms are rotatably attached to the rotatable supports, providing the possibility of rotational movement in at least two axes of rotation. Greater freedom is then possible of configurations of the working positions of the device.

Preferably, attaching of the mast of the frame provides rotational movement and may be implemented, e.g., by embedding the mast on a rotatable axle or otherwise providing the possibility of rotational movement from the transport position to the work position and vice versa. Another option is the possibility of dismounting the mast and attaching it in the determined work positions and in the transport position.

Preferably, the mast has a telescopic or other structure allowing for adjustment of the length, e.g., a segmental one.

Preferably, the stay arms have a telescopic or other structure allowing for adjustment of the length, e.g., a segmental one.

Preferably, the rotatable supports have an adjustable length, which is provided, e.g., through the telescopic structure or a jointed structure. The jointed structure allows not only to adjust the length of the rotatable support, but also to match the shape thereof to the shape of longitudinal beams of the carrier frame in the transport position of the stackable lifting device.

Preferably, the carrier frame has straight longitudinal beams between its first end and the second end, e.g., forming the shape of a cuboid or other regular polygon.

Alternatively, the carrier frame has shaped longitudinal beams, that is, having at least one curving, between its first end and the second end.

Preferably, there is a space inside the carrier frame with sufficient dimensions to accommodate the equipment needed by the user of the stackable lifting device.

The stackable lifting device according to the present invention affords the possibility to transport multiple devices within one transport unit which is, e.g., a Euro pallet, which allows for reduction of the costs of transport. An additional advantage is the multiple options of conveying the device (manual transport, a forklift, cranes) owing to the possibility for the use of various lift points disposed on the carrier frame (2), such as handles for manual transport, a space for gripping with a forklift or hooks for hooking up to onto a crane or gantry.

The object of the present invention in embodiments has been shown in the accompanying drawings in which:
Fig. 1 shows a first embodiment of a stackable lifting device in a work position,
Fig. 2 shows the first embodiment of the stackable lifting device in a transport position,
Fig. 3A and 3B show a second embodiment of the stackable lifting device in the work position,
Fig. 4 shows the second embodiment of the stackable lifting device in the transport position,
Fig. 5 shows a third embodiment of the stackable lifting device in the work position,
Fig. 6A shows a rotatable support with a telescopic structure,
Fig. 6B shows a rotatable support with a jointed structure,
Fig. 7 shows an exemplary stack of the stackable lifting devices according to the present invention laid out on top of each other in the transport position,
Fig. 8 shows the stackable lifting device according to the present invention in a first exemplary work position,
Fig. 9A and 9B show the stackable lifting device according to the present invention in a second exemplary work position,
Fig. 10A and 10B show the stackable lifting device according to the present invention in a third exemplary work position,
Fig. 11 shows the stackable lifting device according to the present invention in a fourth exemplary work position.

The stackable lifting device according to the present invention comprises a cuboidal carrier frame (2), a mast (1) embedded in the carrier frame (2), and stay arms (9, 11) for stabilization of the position of the carrier frame (2) and the mast (1). In order to provide better stabilization of the mast (1), the stay arms (9,11) are hook-up-able to a hook element (15) located on the mast (1). Other forms of connecting the mast to the stay arms in the work position are also permissible. The stay arms (9,11) constitute at least one longitudinal stay arm (9) and at least two rotatable stay arms (11). The longitudinal stay arm (9) is rotatably attached to a first end (3) of the carrier frame (2). Each of the rotatable stay arms (11) is rotatably attached to one of rotatable supports (12), wherein the rotatable supports (12) are rotatably attached to a second end (4) of the carrier frame (2). The rotatable attachment means the possibility of rotational movement in at least one axis of rotation.

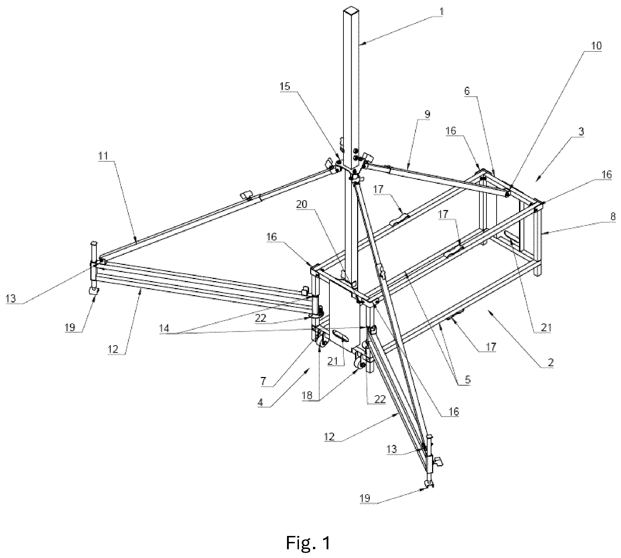

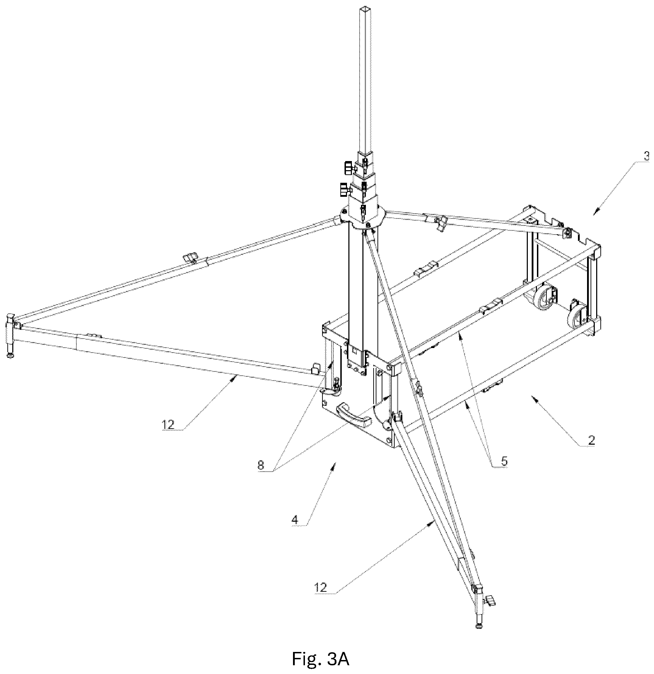

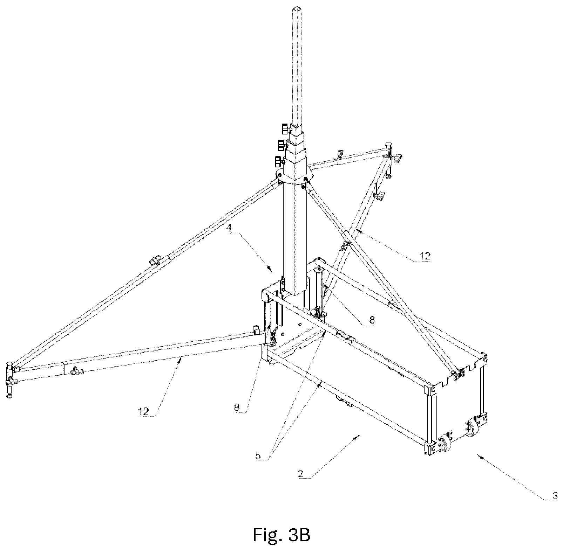

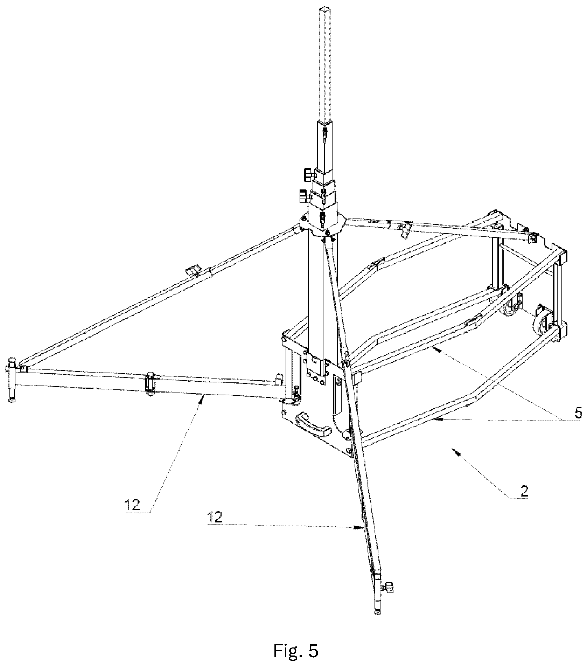

The carrier frame (2) may have the shape of a regular prism, e.g., a cuboid, the bases of which are at a first and second ends of the stackable lifting device. The bases of such a prism of the carrier frame (2) may have all the edges formed from beams (6,7,8) of the carrier (2), as in Fig. 1-2, or may, e.g., have the form of elements formed from a sheet of a metal plate, as in Fig. 3-5. Other shapes of the longitudinal beams (5) of the carrier frame (2) are also possible, e.g., a shape formed such that the stackable lifting device, after retraction into the transport position, when viewed from the top, has the shape of a hexagon, as in Fig. 5. In the embodiments shown in the figures, there are four longitudinal beams (5) of the carrier frame (2) between the two ends of the carrier frame, however, it is possible for a different number of the longitudinal beams (5) to be used through, e.g., addition of additional longitudinal beams (5) additionally reinforcing the structure of the stackable lifting device. Each of the elements of the structure, i.e., the beam of the carrier frame (2), the stay arms (9,11), the rotatable supports (12) and the mast (1), may be permanently or detachably connected to the remaining elements of the structure. In the embodiments shown in the figures, the stackable lifting device has three stay arms (9,11): one longitudinal stay arm (9) and two rotatable stay arms (11), however, it is also possible for a larger number of stay arms to be made. The longitudinal stay arm (9), the rotatable supports (12), and the rotatable stay arms (11) may be attached rotatably, providing rotational movement in one, two or a larger number of axes, e.g., by being attached through joints (10,14). Various connections are permissible allowing for rotational movement, e.g., through ball joints or hinges.

A first embodiment of the stackable lifting device in an exemplary work position, visible in Fig. 1, comprises a carrier frame (2) forming a cuboid with the lateral edges longer than the edges of the base. Each of the edges of this cuboid is formed by a beam of the carrier frame, wherein the structure of the carrier frame (2) comprises longitudinal beams (5) forming the lateral edges of the cuboid (the length of the cuboid), width beams (6,7) forming the edges of the width of the bases of the cuboid, and height beams (8) forming the edges of the height of the bases of the cuboid. The first base of the cuboid is at a first end (3) of the carrier frame (2), and the second base of the cuboid is at a second end (4) of the carrier frame (2). A mast (1) of the device, visible in Fig. 1, has a telescopic structure in an extended position and is rotated perpendicular to the longitudinal beams (5) of the carrier frame (2) on a rotatable axle (20). The carrier frame (2) may be furnished with handles (21) for manual transport, guides (17) for a transport belt, and/or hooks for hooking up to onto a crane or gantry. Moreover, the structure of the carrier frame (2) made of beams forms a space for gripping the carrier frame (2) of the lifting device in the transport position with a forklift. Positioning metal plates (16) are located at the corners of the frame facilitating a stable stacking of the lifting devices in a one-on-top-of-another-one manner. For facilitated transport, it is also possible to furnish the carrier frame (2) with wheels (18). The position of the mast (1) is stabilized by three telescopic stay arms (9,11): one longitudinal stay arm (9) and two rotatable stay arms (11). All the stay arms are hooked with their free ends to a hook element (15) of the mast (1), comprising the hooks of the stays. The longitudinal stay arm (9) is pivoted at a joint (10) of the longitudinal stay arm, attached at the first end (3) of the carrier frame (2) on the upper width beam (6) of the carrier frame (2). Each of the rotatable stay arms (11) is attached to an intermediate joint (13) located at an end of the rotatable support (12). Each of the rotatable supports (12) is attached with its second end to the height beam (8) of the carrier frame (2) at the first end (3) of the carrier frame (2) through a joint (14) of the rotatable support (12). For improved possibility of adapting the layout of the supports to the shaping of the terrain on which the lifting device is set in the work position, adjustable-height support adjusters (19) of the rotatable supports (12) are used.

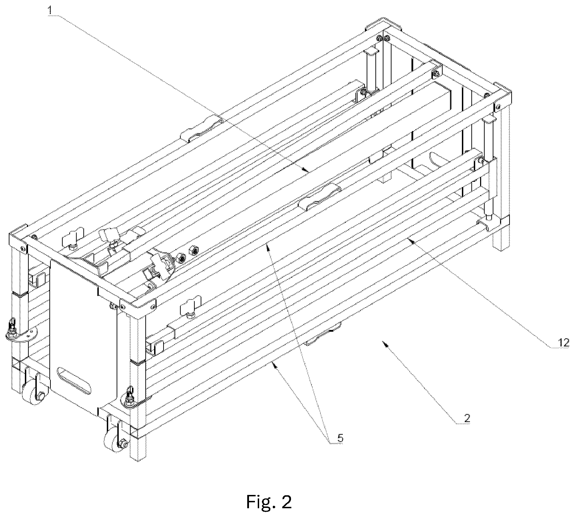

Fig. 2 shows the lifting device of Fig. 1 in the transport position in which the mast (1) is concealed inside the carrier frame (2), and the rotatable supports (12) are retracted into a position along the longitudinal beams (5).

Fig. 3A and Fig. 3B show a second embodiment of the stackable lifting device in an exemplary work position. In this embodiment, the carrier frame (2) forms a cuboid with the lateral edges longer than the edges of the base. The structure of the carrier frame (2) comprises the longitudinal beams (5) forming the lateral edges of the cuboid (the length of the cuboid). The first base of the cuboid is at the first end (3) of the carrier frame (2), and the second base of the cuboid is at the second end (4) of the carrier frame (2). The bases have the form of elements formed from a sheet of a metal plate with the height beams (8) embedded in them. The rotatable supports (12) are mounted to the height beams (8). In this embodiment, the rotatable supports (12) have been used with the telescopic structure allowing for their length to be adjusted.

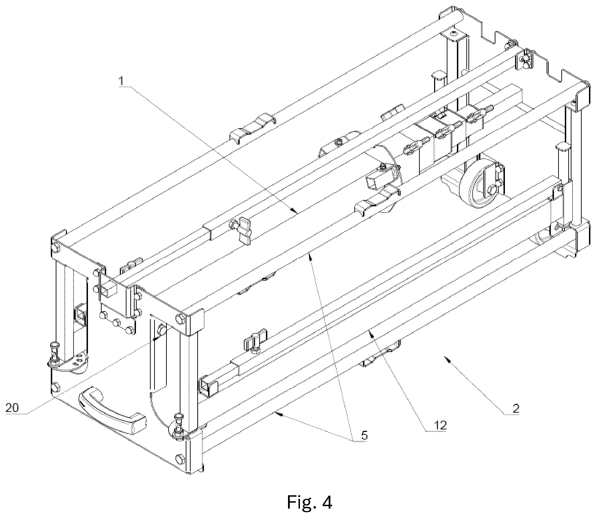

Fig. 4 shows the lifting device of Fig. 3A and Fig. 3B in the transport position in which the mast (1) is concealed inside the carrier frame (2), and the rotatable supports (12) are retracted into a position along the longitudinal beams (5). Similarly to other embodiments, equipment such as a rechargeable battery for the lighting used on the lifting device may be concealed in a space inside the carrier frame (2) below the rotatable axle (20) of the mast.

Fig. 5 shows a third embodiment of the stackable lifting device in an exemplary work position. In this embodiment, the longitudinal beams (5) of the carrier frame (2) are formed such that the stackable lifting device, after retraction into the transport position, when viewed from the top, has the shape of a hexagon. In this embodiment, the rotatable supports (12) have been used with a jointed structure allowing for their shape to be matched to the shape of the longitudinal beams (5) of the carrier frame (2) after the retraction into the transport position. Through bending of the longitudinal beams, the space inside the carrier frame (2) has been enlarged, adjusting its dimensions to the dimensions of the equipment which it is tasked to accommodate. The elongated rotatable support (12) laid apart in the work position of the lifting device additionally increases its stability. Other shapes for forming the longitudinal beams (5) of the carrier frame (2), not shown in the drawings, are also possible.

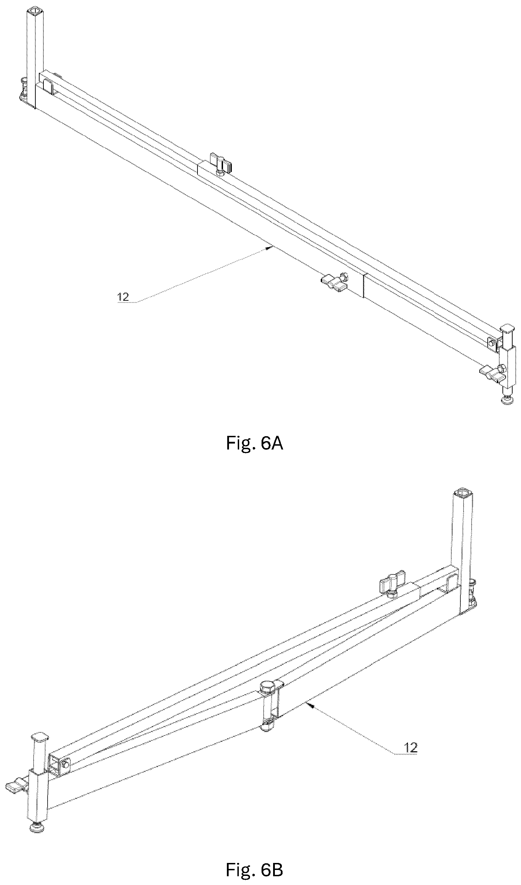

Fig. 6A shows the rotatable support (12) with the telescopic structure, and Fig. 6B shows the rotatable support (12) with the jointed structure. The jointed structure means that the rotatable support (12) comprises two modules connected with a joint.

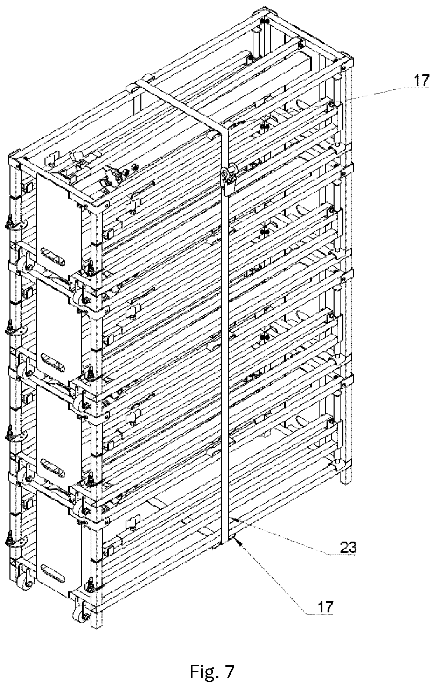

Fig. 7 shows the lifting device in the embodiment of Fig. 1 in the transport position after stacking. In the figure, four lifting devices are stacked in a one-on-top-of-another-one manner and connected with a transport belt (23) the position of which at the top of the stack is stabilized by the guides (17) of the uppermost device, and at the bottom of the stack by the guides (17) of the lowermost device. It is also possible for any other configurations to be laid out of the stack of the lifting devices according to the present invention which comprises, e.g., two or more rows or columns of the lifting devices in the transport position, laid out vertically or horizontally in a one-on-top-of-another-one or one-next-to-another-one manner.

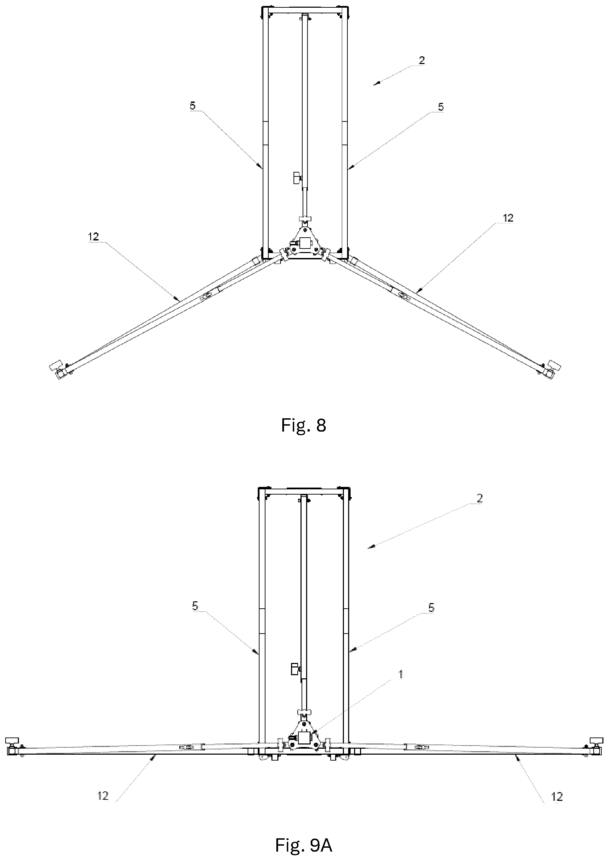

Fig. 8 shows the stackable lifting device according to the present invention in a first exemplary work position in which the rotatable supports (12) are deflected at an angle 120° relative to the longitudinal beams (5) of the carrier frame (2), affording equal support to the mast in each direction.

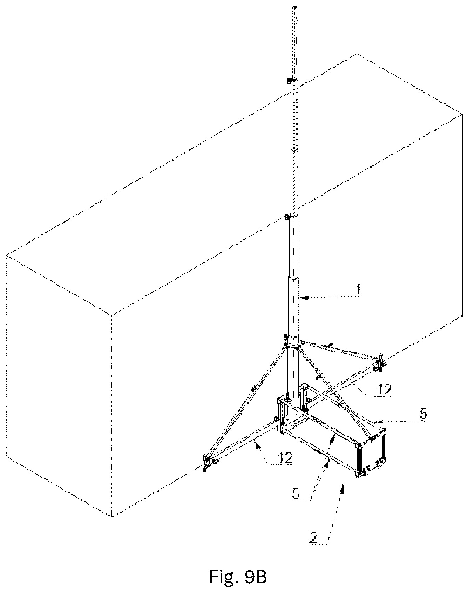

Fig. 9A and Fig. 9B show the stackable lifting device according to the present invention in a second exemplary work position in which the rotatable supports (12) are deflected at an angle 90° relative to the longitudinal beams (5) of the carrier frame (2). Such a lay-out allows, e.g., to set the mast (1) in maximum proximity to an obstacle or an object such as a wall.

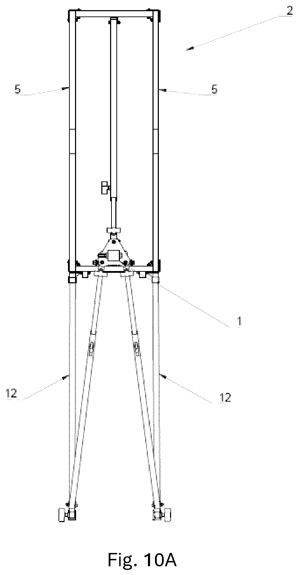

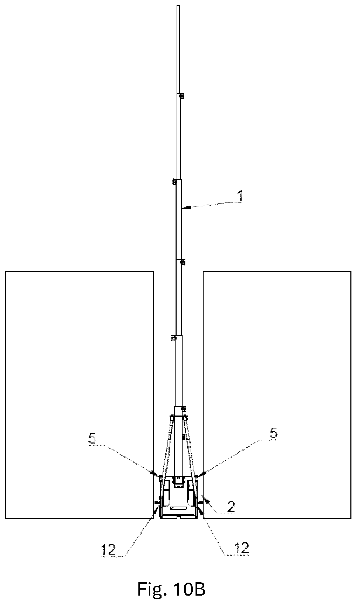

Fig. 10A and Fig. 10B show the stackable lifting device according to the present invention in a third exemplary work position in which the rotatable supports (12) are deflected at an angle 180° relative to the longitudinal beams (5) of the carrier frame (2). Such a lay-out allows, e.g., to set the mast (1) in a narrow space between the two obstacles or objects.

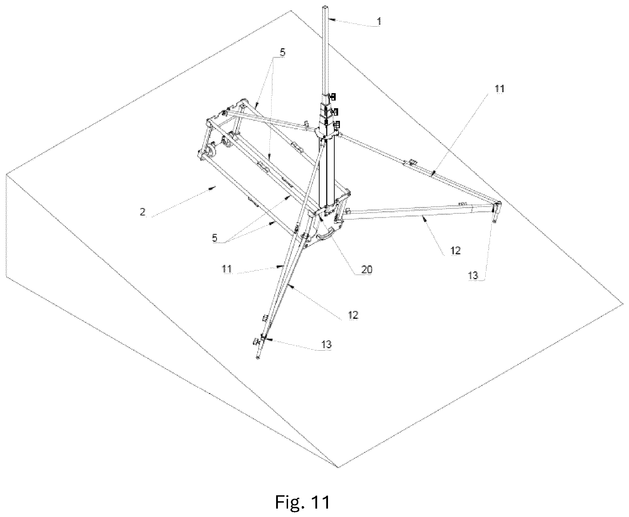

Fig. **11** shows the stackable lifting device according to the present invention in a fourth exemplary work position in which the stackable lifting device is set on an elevation. The rotatable supports (12) are deflected at an angle 120° relative to the longitudinal beams (5) of the carrier frame (2). The mast (1) of the device is extended and rotated on the rotatable axle (20) at an angle to the longitudinal beams (5) of the carrier frame (2) so as to attain the desired vertical setting of the mast (1) regardless of the slope of the surface of the elevation on which the lifting device is set. Owing to the use of the intermediate joint (13) providing rotation around the two axes and the rotatable stay arms (11) with a circular cross-section, it is possible to vertically set the mast (1) of the lifting device and lock its position also on surfaces with a high slope.

### List of reference signs:

1 - mast
2 - carrier frame
3 - a first end of the carrier frame
4 - a second end of the carrier frame
5 - longitudinal beams
6 - upper width beams
7 - lower width beams
8 - height beams
9 - longitudinal stay arm
10 - a joint of the longitudinal stay arm
11 - rotatable stay arms
12 - rotatable supports
13 - intermediate joint
14 - joints of the rotatable support
15 - hook element
16 - positioning metal plates
17 - guides for a transport belt
18 - wheels
19 - a support adjuster of the rotatable supports (12)
20 - a rotatable axle of the mast
21 - a handle for manual transport
22 - positioners of the rotatable support
23 - transport belt

## Claims

1. A stackable lifting device comprising
a carrier frame (2),
a mast (1) embedded in the carrier frame (2), and
stay arms (9,11) for stabilization of the position of the carrier frame (2) and the mast (1), wherein the suction arms (9,11) have an adjustable length, **characterized in that**
the stay arms (9,11) constitute at least one longitudinal stay arm (9) and at least two rotatable stay arms (11),
wherein the each longitudinal stay arm (9) is rotatably attached to a first end (3) of the carrier frame (2),
wherein each of the rotatable stay arms (11) is rotatably attached to a rotatable support (12), wherein the rotatable supports (12) are rotatably attached to a second end (4) of the carrier frame (2).

2. The stackable lifting device according to claim 1, in which the rotatable stay arms (11) are rotatably attached to the rotatable supports (12), providing the possibility of rotational movement in at least two axes of rotation.

3. The stackable lifting device according to claim 1 or 2, in which the mast (1) is embedded on a rotatable axle (20).

4. The stackable lifting device according to any one of claims 1-3, in which the mast (1) has a telescopic structure.

5. The stackable lifting device according to any one of claims 1-4, in which the stay arms (9,11) have a telescopic structure.

6. The stackable lifting device according to any one of claims 1-5, in which the rotatable supports (12) have an adjustable length.

7. The stackable lifting device according to any one of claims 6, in which the rotatable supports (12) have a telescopic structure.

8. The stackable lifting device according to any one of claims 6, in which the rotatable supports (12) have a jointed structure.

9. The stackable lifting device according to any one of claims 1-8, in which the carrier frame (2) has straight longitudinal beams (5) between its first end (3) and the second end (4).

10. The stackable lifting device according to any one of claims 9, in which the carrier frame (2) forms the shape of a cuboid.

11. The stackable lifting device according to any one of claims 1-8, in which the carrier frame (2) has shaped longitudinal beams (5) between its first end (3) and the second end (4).

12. The stackable lifting device according to any one of claims 1-11, in which there is a space for equipment inside the carrier frame (2).
